# EUROPEAN PATENT SPECIFICATION

(11) **EP 3 659 274 B1**
(45) Date of publication and mention of the grant of the patent: **06.10.2021**
(21) Application number: 18739976.1
(22) Date of filing: 08.06.2018
(51) Int. Cl.: H04B 11/00

(54) **DYNAMIC CALIBRATION FOR AUDIO DATA TRANSFER**
DYNAMISCHE KALIBRIERUNG FÜR AUDIODATENÜBERTRAGUNG
ÉTALONNAGE DYNAMIQUE D'UN TRANSFERT DE DONNÉES AUDIO

(30) Priority: 24.08.2017 US 201762549691 P
(43) Date of publication of application: 03.06.2020
(73) Proprietor: Google LLC, Mountain View, CA 94043 (US)
(72) Inventor: MADAN, Arjita, Hyderabad TS 500084 (IN); GUPTA, Aviral, Hyderabad TS 500084 (IN); RAWAT, Paridhi, Hyderabad TS 500084 (IN); KHANNA, Heman, Hyderabad TS 500084 (IN); LAISHRAM, Rohan, Hyderabad TS 500084 (IN); MADABHUSHI, Gopi, Krishna, Hyderabad TS 500084 (IN); AHLAWAT, Mrinal, Hyderabad TS 500084 (IN)
(74) Representative: Smith, Jeremy Robert
(86) International application number: PCT/US2018/036782
(87) International publication number: WO 2019/040152

(56) References cited:
- US-A1- 2012 051 187
- US-A1- 2012 171 963
- US-B1- 8 967 465

## Description

### CROSS-REFERENCE TO RELATED APPLICATION

This patent application claims priority to U.S. Patent Application No. 62/549,691, filed August 24, 2017, and entitled "Dynamic Calibration for Audio Data Transfer."

### TECHNICAL FIELD

The technology disclosed herein relates to dynamic calibration of optimum audio-based data transfer hardware configurations.

### BACKGROUND

Mobile computing devices commonly exchange data via the Internet. In cases where an Internet connection is unavailable or undesirable, data can be transferred using peer-to-peer connectivity, such as Bluetooth or near field communications. However, these peer-to-peer connectivity solutions require specific hardware and APIs to function. Accordingly, there is a need to enable and use features and hardware commonly found on mobile computing devices to exchange data.

Each phone or mobile communication device has, by default, a microphone and a speaker. By utilizing the microphone of one mobile communication device and the speaker of another mobile communication device, data can be transmitted over sound waves. However, each mobile communication device has a specific hardware configuration that provides for the best audio broadcast transmission and a specific hardware configuration that provides for the best audio reception for the mobile communication device. With the vast number of audio communication devices available in the marketplace and the increasing number of new devices being released, there is a need to enable mobile communication devices to determine their optimum configuration prior to broadcasting or receiving audio-based data.

US 8,967,465 B1 discloses a card reader for receiving payment card information at a mobile point-of-sale terminal. In some implementations, a reader of the subject technology can include a memory, a conditioning module and a 3.5 mm audio plug including an audio bus that is configured for insertion into a headphone port of a host device, such as a smartphone or tablet computer. Implementations of the subject technology also include a microprocessor configured to perform operations for tuning communication parameters.

US 2012/0051187 A1 discloses a method, apparatus and computer program product for wirelessly transmitting and receiving data through sonic communication and a method and system for devices to exchange data over the air using a sonic carrier signal.

US 2012/0171963 A1 discloses a system for wireless communication using ultrasonic signals that includes a transmission module, which receives input signals from a wireless device, modifies the received input signals in a manner that converts each received input signal into a corresponding ultrasonic signal and wirelessly transmits each said ultrasonic signal over an ultrasonic link, and a receiving module, which receives the transmitted ultrasonic signals, recovers the corresponding input signals therefrom and enables outputting each respective input signal through one or more output devices.

### SUMMARY

Aspects of the invention are set out in the independent claims. Techniques herein provide computer-implemented methods for dynamic calibration for audio-based data transfer. In an example, a computing device receives an audio-based data transmission using an initial data reception hardware configuration. The computing device analyzes signal strength of the audio-based data transmission and a reliability of the audio-based data transmission to determine a confidence score for the initial data reception hardware configuration. If the confidence score is below a defined threshold confidence score, the computing device modifies the data reception hardware configuration. The computing device receives a retransmitted audio-based data transmission using the modified data reception hardware configuration, analyzes a second signal strength of the retransmitted audio-based data transmission and a second reliability of the audio-based data transmission, and determines a second confidence score for the modified data reception hardware configurations. If the second confidence score is at or above the defined threshold confidence score, the computing device updates the initial data reception hardware configuration in accordance with the modified data reception hardware configuration. In an example, the computing device notifies a second computing device to modify data broadcasting hardware configurations, wherein the second computing device modifies the data broadcasting hardware configurations prior to retransmitting the audio-based data transmission.

In certain other example aspects described herein, systems and computer program products to dynamically calibrate computing devices for audio-based data transfer are provided.

These and other aspects, objects, features, and advantages of the examples will become apparent to those having ordinary skill in the art upon consideration of the following detailed description of illustrated examples.

### BRIEF DESCRIPTION OF THE DRAWINGS

Figure 1 is a block diagram depicting a system for dynamic calibration for audio-based data transfer, in accordance with certain examples.
Figure 2 is a block flow diagram depicting a method for dynamic calibration for audio-based data transfer, in accordance with certain examples.
Figure 3 is a block flow diagram depicting a method for optimum calibration for audio-based data broadcasting, in accordance with certain examples.
Figure 4 is a block flow diagram depicting a method for optimum calibration for audio-based data reception, in accordance with certain examples.
Figure 5 is a block diagram depicting a computing machine and module, in accordance with certain examples.

### DETAILED DESCRIPTION OF THE EXAMPLES

### Overview

The examples described herein provide computer-implemented techniques for dynamic calibration for audio-based data transfer. In a proposed computer-implemented method for dynamic calibration for audio-based data transfer a computing device receives an audio-based data transmission using an initial data reception hardware configuration. The computing device analyzes signal strength of the audio-based data transmission and a reliability of the audio-based data transmission to determine a confidence score for the initial data reception hardware configuration. If the confidence score is below a defined threshold confidence score, the computing device modifies the data reception hardware configuration. The computing device receives a retransmitted audio-based data transmission using the modified data reception hardware configuration, analyzes a second signal strength of the retransmitted audio-based data transmission and a second reliability of the audio-based data transmission, and determines a second confidence score for the modified data reception hardware configurations. If the second confidence score is at or above the defined threshold confidence score, the computing device updates the initial data reception hardware configuration in accordance with the modified data reception hardware configuration. Analyzing the reliability of the audio-based data transmission may, for example, include determining whether the complete data transmission was received. Determining whether the complete data transmission was received may include receiving an audio token in the audio-based data transmission which is known to the computing device (as well as broadcast and known to a broadcasting second computing device) and comparing the data received in the audio token to known (stored) data for the audio token. The computing device may thus compare data of an audio token received in the audio-based transmission with a reference audio token known and thus stored in order to analyze whether the complete data transmission was received and to determine a reliability based on a reliability parameter whose value may indicated whether the complete data transmission was received. A value of the reliability parameter may also indicate how much, for example how many percent of the known audio token and hence of the complete data transmission was received.

In an example, the computing device notifies a second computing device to modify data broadcasting hardware configurations, wherein the second computing device modifies the data broadcasting hardware configurations prior to retransmitting the audio-based data transmission. The second computing device to be notified to modify the data broadcasting hardware configuration may broadcast the audio-based data transmission received by the computing device.

In an example, the initial data reception hardware configurations may comprise a first combination of hardware configuration parameters previously configured to provide a pre-determined data reception for the computing device, in particular a data reception for the computing device considered best based on a specific combination of different reception and/or transmission parameters for the received audio-based data transmission. The different reception and/or transmission parameters may comprise volume, frequency band, sampling rate, microphone input used, speaker output used, number of repeated attempts made, usage of a stereo channel, and usage of a monolog mono channel. The first combination of hardware configuration parameters may for example set an initial volume, frequency, sampling rate, speaker output used, audio channel used, or other properties applying sound waves or sound transmission that may be varied.

In an example, the method may further comprise analyzing, by the computing device, a time elapsed to complete the transmission of the audio-based data transmission. For example, the computing device determines a time elapsed to complete the transmission of an audio token or other data included in the audio-based data transmission to evaluate the quality of an audio token reception. In this example, the computing device may for example determine a quality score for each reception of an audio token based on data logged from each reception of each audio token. In an example, the computing device determines an optimum reception configuration based on a quality score for each reception of an audio token.

In an example, the modified data reception hardware configuration is transmitted to multiple computing devices that comprise a similar model as the computing device. A similar model may include a model of a computing device which comprises an identical model number or model number identifier.

In an example, a broadcasting computing device retrieves optimum configuration data for broadcasting data via an audio communication channel. Example optimum configuration describes the optimum broadcasting hardware configurations for the broadcasting computing device or optimum broadcasting hardware configurations for similar broadcasting computing devices (for example, broadcasting computing devices that are of a similar brand or model). In an example, initial optimum broadcasting hardware configurations are received from an account management computing system. In another example, the initial optimum broadcasting configurations are determined by the broadcasting computing device using an application downloaded from the account management computing system. In this example, the broadcasting computing device transmits and/or receives audio tokens while the application logs data associated with each reception and/or transmission.

In an example, initial optimum data broadcasting hardware configuration data is determined for multiple broadcasting computing devices. For example, each broadcasting computing device transmits an audio token using varying hardware configurations. Varying hardware configurations comprise varying configurations such as volume, frequency, sampling rate, speaker output used, audio channel used, or other properties applying sound waves or sound transmission that may be varied via a broadcasting computing device. In an example, each broadcasting communication device transmits using predetermined sets of hardware configurations. For example, each broadcasting computing device transmits using a predetermined number of different volume configurations, a predetermined number of different frequency configurations, a predetermined number of different amplitude configurations, varying one particular configuration while holding all other configurations constant. In other examples, the account management computing system determines a set of preferred initial test configurations, transmits the set of preferred initial test configurations to each broadcasting computing device, and each broadcasting computing device transmits an audio token over each of the set of initial test configurations to the account management computing system.

The application on each broadcasting computing device, on each receiving computing device, and/or on the account management computing system logs data associated with each audio token transmission and reception. For example, the account management computing system communicates with applications executing on the broadcasting computing devices and receiving computing devices. For example, the account management computing system determines a time elapsed to complete the transmission of the audio token or other data to evaluate the quality of the audio transmission. In this example, the account management computing system determines a quality score for each transmission of audio token from each particular broadcasting computing device based on the data logged from each transmission of each audio token. In an example, for each broadcasting computing device, based on the quality scores for each transmission of audio token, the account management computing system determines an optimum transmission configuration.

In an example, to determine initial optimum data reception hardware configuration, each receiving computing device receives audio tokens transmitted by broadcasting computing devices and using varying hardware configurations associated with reception of audio signals. In an example, each receiving computing device receives audio tokens over a predetermined set of hardware configurations. For example, each receiving computing device receives audio tokens using a predetermined number of different volume configurations, a predetermined number of different frequency configurations, a predetermined number of different amplitude configurations, varying one particular configuration while holding all other configurations constant.

In other examples, the account management computing system determines a set of preferred initial test configurations for reception of audio tokens. The account management computing system transmits the set of preferred initial test configurations to each receiving computing device. The broadcasting computing device transmits an audio token, and the receiving computing device receives the audio token using each of the set of initial test configurations. The application on the receiving computing device, broadcasting computing device, and/or the account management computing system logs data associated with each transmission and reception of the audio tokens. For example, for each transmission and reception of an audio token, the account management computing system communicates with applications executing on both the broadcasting computing device and the receiving computing devices. For example, the account management computing system determines a time elapsed to complete the transmission of the audio token or other data to evaluate the quality of the audio token reception. In this example, the account management computing system determines a quality score for each reception of audio token for each particular receiving computing device based on the data logged from each reception of each audio token. In an example, the account management computing system determines an optimum reception configuration for each receiving computing device based on the quality scores for each reception of audio token. In an example, the account management computing system determines optimum data broadcasting and data reception hardware configurations for each of multiple different types of computing devices based on the quality scores for each reception of audio token.

In an example, when a broadcasting computing device is directed to transmit an audio token to a receiving computing device, the broadcasting computing device accesses the optimum data broadcasting hardware configurations. In an example, the receiving computing device accesses the optimum data reception hardware configurations. In an example, the optimum configurations are maintained by the account management computing system and accessible to the broadcasting computing device and the receiving computing device via the application. The broadcasting computing device configures hardware settings to transmit the audio token in accordance with the optimum data broadcasting hardware configurations for transmission of audio tokens by the broadcasting computing device. In another example, the receiving broadcasting computing device configures hardware settings to receive the audio token transmitted by the broadcasting computing device in accordance with the optimum data reception hardware configurations for reception of audio tokens by the receiving computing device.

In an example, the applications on both the broadcasting computing device and the receiving computing device (and/or the account management computing system, which communicates with the computing devices via a network) logs performance data associated with the transmission and reception of the audio token. For example, the account management computing system determines a time elapsed to complete the transmission of the audio token or other data to evaluate the quality of the audio token transmission and reception. In this example, the account management computing system determines a quality score for both the transmission by the broadcasting computing device and the reception by the receiving computing device of the audio token based on the data logged by the applications on the devices.

In an example, the account management computing system updates the optimum data broadcasting hardware configurations for the transmission of audio tokens based on the quality score of the transmission. For example, the quality score of the transmission at the particular hardware configuration decreases over the initial optimum configuration data. In this example, the account management computing system lowers the quality score associated with the optimum configuration data for that hardware configuration. In another example, the quality score of the transmission at the particular hardware configuration increases over the initial optimum configuration data. In this example, the account management computing system increases the quality score associated with the optimum configuration data for that hardware configuration. In an example, the account management computing system only modifies the quality score for the hardware configuration if the change is greater than a threshold change.

In an example, as a result of modifying the quality score for the data broadcasting hardware configurations, the account management computing system determines that the hardware configuration is no longer the optimum transmission configuration for the broadcasting computing device. In this example, the account management computing system determines that an alternative hardware configuration is the optimum configuration for transmission of audio tokens for the broadcasting computing device and updates the optimum data broadcasting hardware configurations based on the determination.

In another example, the account management computing system updates the optimum data reception hardware configurations for the reception of audio tokens based on the quality score of the transmission. For example, the quality score of the reception at the particular hardware configuration decreases over the initial optimum configuration data. In this example, the account management computing system lowers the quality score associated with the optimum configuration data for that hardware configuration. In another example, the quality score of the reception at the particular hardware configuration increases over the initial optimum configuration data. In this example, the account management computing system increases the quality score associated with the optimum configuration data for that hardware configuration. In an example, the account management computing system only modifies the quality score for the hardware configuration if the change over the previous quality score is greater than a threshold change.

In an example, as a result of modifying the quality score for the hardware configuration, the account management computing system determines that the data reception hardware configurations are no longer the optimum reception configuration for the receiving computing device. In this example, the account management computing system determines that an alternative hardware configuration is the optimum configuration for reception of audio tokens for the receiving device and updates the optimum data reception hardware configurations based on the determination.

In an example, the account management computing system provides the updated optimum configuration data to multiple different computing devices for access by each of the multiple computing devices via the network. In an example, a particular one of the multiple computing devices is directed to transmit an audio token. For example, a user of the particular broadcasting computing device initiates a data transfer. The particular broadcasting computing device retrieves the updated optimum data broadcasting hardware configurations and transmits the audio token in accordance with the updated hardware configurations. In another example, a particular one of the multiple computing devices is directed to receive an audio token. The particular receiving computing device retrieves the updated optimum data reception configurations and configures the hardware settings in accordance with the optimum hardware configurations to receive the audio token.

By using and relying on the methods and systems described herein, the system dynamically calibrates the optimum audio-based data transfer hardware configurations. As such, the systems and methods described herein may be employed to preemptively find the best broadcasting and best receiving configurations without requiring a user to physically manipulate the configurations. The system communicates the optimum settings with an account management computing system that can push the optimum settings to all like computing devices, saving time and resources. The automatic and dynamic nature of the system operates during the transmission of audio-based data. Thus, the system occurs in the background of the transmission at a rapid pace that is quicker than can be achieved by a human performing a like action.

A dynamic configuration scheme can be shared among all different computing devices that supports audio-based data transfer. This dynamic configuration scheme is beneficial, for example, when a new computing device, for which the ideal configuration is not yet known, is utilized for audio-based data transfer. In this example, an application installed on the computing device can modify the hardware configurations to suggest an optimum configuration. The optimum configuration is then transmitted to the account management computing system via the network and made available to other computing devices having the same model as the computing device.

In another example, this dynamic configuration scheme is beneficial for example, when a new computing device model is launched in the market. Lab testing can be used to derive the optimum configuration and share it across computing devices of the same model.

In another example, this dynamic configuration scheme is beneficial for example, when there is a shift in the intended audio-based data transfer scheme. For example changing the frequency bands at which all computing devices must send/receive. In this example, the determined configuration can be communicated to all computing devices. Such changes can be timed so that all computing devices move to the new scheme at a predefined time. In another example, the determined configuration is communicated to groups of devices which behave similarly (for example, those that are the same model or related models from the same manufacturer). In this example, the determined configuration from a single computing device can trigger audio configuration changes in a large number of devices which belong to the same group.

Various examples will be explained in more detail in the following description, read in conjunction with the figures illustrating the program flow.

Turning now to the drawings, in which like numerals represent like (but not necessarily identical) elements throughout the figures, example embodiments are described in detail.

### Example System Architecture

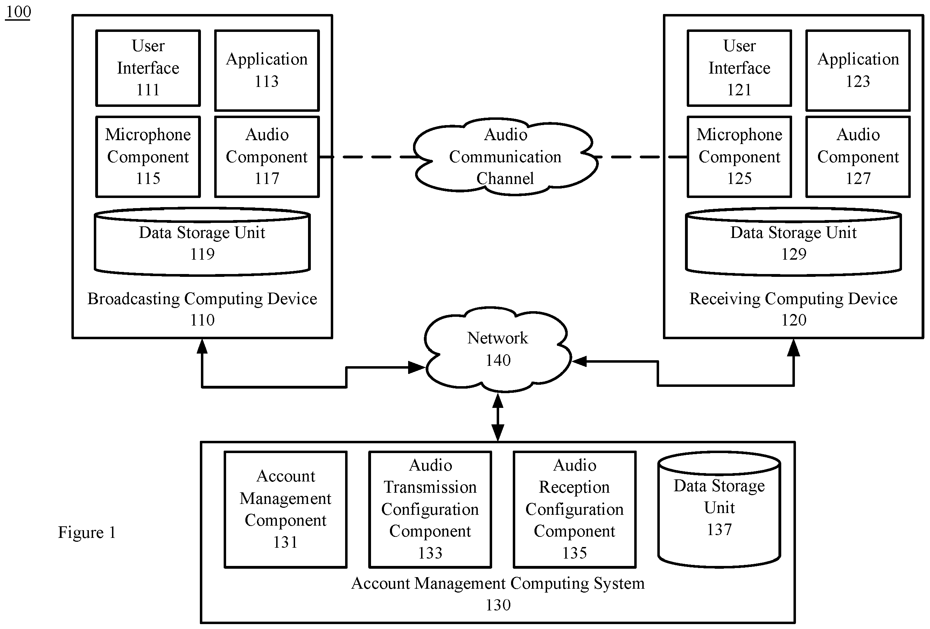

Figure 1 is a block diagram depicting a system for dynamic calibration for audio-based data transfer, in accordance with certain examples. As depicted in Figure 1, the example operating environment 100 comprises computing systems 110, 120, and 130 that are configured to communicate with one another via one or more networks 140 via network computing devices. In another example, two or more of these computing systems (including systems 110, 120, and 130) are integrated into the same system. In some examples, a user associated with a computing device must install an application and/or make a feature selection to obtain the benefits of the techniques described herein.

Each network 140 comprises a wired or wireless telecommunication mechanism by which network computing systems (including systems 110, 120, and 130) can communicate and exchange data. For example, each network 140 can be implemented as, or may be a part of, a storage area network (SAN), personal area network (PAN), a metropolitan area network (MAN), a local area network (LAN), a wide area network (WAN), a wireless local area network (WLAN), a virtual private network (VPN), an intranet, an Internet, a mobile telephone network, a card network, Bluetooth, Bluetooth Low Energy (BLE), near field communication network (NFC), any form of standardized radio frequency, infrared, sound (for example, audible sounds, melodies, and ultrasound), other short range communication channel, or any combination thereof, or any other appropriate architecture or system that facilitates the communication of signals, data, and/or messages (generally referred to as data). Throughout this specification, it should be understood that the terms "data" and "information" are used interchangeably herein to refer to text, images, audio, video, or any other form of information that can exist in a computer-based environment.

In an example, each network computing system (including systems 110, 120, and 130) comprises a computing device having a communication module capable of transmitting and receiving data over the network 140. For example, each network computing system (including systems 110, 120, and 130) may comprise a server, personal computer, mobile device (for example, notebook computer, tablet computer, netbook computer, personal digital assistant (PDA), video game device, GPS locator device, cellular telephone, Smartphone, or other mobile device), a television with one or more processors embedded therein and/or coupled thereto, or other appropriate technology that comprises or is coupled to a web browser or other application for communicating via the network 140. In the example depicted in Figure 1, the network computing systems (including systems 110, 120, and 130) are operated by users and an account management computing system operator, respectively.

An example broadcasting computing device 110 comprises a user interface 111, an application 113, a microphone component 115, an audio component 117, and a data storage unit 119. In an example, the broadcasting computing device 110 may be a personal computer, mobile device (for example, notebook, computer, tablet computer, netbook computer, personal digital assistant (PDA), video game device, GPS locator device, cellular telephone, Smartphone or other mobile device), television, wearable computing devices (for example, watches, rings, or glasses), or other appropriate technology that comprises or is coupled to a web server (or other suitable application for interacting with web page files) or that comprises or is coupled to an application 113.

The user can use the broadcasting computing device 110 to broadcast audio-based data via the audio component 117 using the user interface 111 and the application 113. For example, the user interface 111 comprises a touch screen, a voice-based interface, or any other interface that allows the user to provide input and receive output from the application 113. In an example, the user interacts with the application 113 via the user interface 111 to select or instruct the broadcasting computing device 110 to broadcast audio-based data via the audio component 117.

The application 113 is a program, function, routine, applet or similar entity that exists on and performs its operations on the broadcasting computing device 110. For example, the application 113 may be one or more of an audio application, a data application, an account management computing system 130 application, an Internet browser, a user interface 111 application, or other suitable application operating on the broadcasting computing device 110. In some examples, the user must install an application 113 and/or make a feature selection on the broadcasting computing device 110 to obtain the benefits of the techniques described herein.

In an example, the data storage unit 119 and application 113 may be implemented in a secure element or other secure memory (not shown) on the broadcasting computing device 110. In another example, the data storage unit 119 may be a separate memory unit resident on the broadcasting computing device 110. An example data storage unit 119 enables storage of optimum data broadcasting hardware configurations. In an example, the data storage unit 119 can comprise a local or remote data storage structure accessible to the broadcasting computing device 110 suitable for storing information. In an example, the data storage unit 119 stores encrypted information, such as HTML5 local storage.

In an example, the audio component 117 comprises a speaker device or other device capable of producing a sound output. An example sound output comprises an ultrasound output. In an example, the audio component 117 communicates with the application 113 to receive an instruction to broadcast a sound output. In an example, the audio component 117 is a component of the broadcasting computing device 110. In another example, the audio component 117 is communicatively coupled to the broadcasting computing device 110.

In an example, the microphone component 115 comprises a microphone device that is capable of receiving sound inputs from an environment of the broadcasting computing device 110. In an example, the microphone component 115 communicates with the application 113 to receive an instruction to transition from a passive mode to an active mode and listen for sound inputs. In an example, the microphone component 115 receives sound inputs while in the active mode and transmits the received sound inputs to the application 113.

An example broadcasting computing device 110 communicates with a receiving computing device 120 via an audio communication channel. An example communication via the audio communication channel comprises the transmission of audio-based data. In an example, the data is transferred from the broadcasting computing device 110 to the receiving computing device 120 over sound waves.

An example receiving computing device 120 comprises a user interface 121, an application 123, a microphone component 125, an audio component 127, and a data storage unit 129. In an example, the receiving computing device 120 may be a personal computer, mobile device (for example, notebook, computer, tablet computer, netbook computer, personal digital assistant (PDA), video game device, GPS locator device, cellular telephone, Smartphone or other mobile device), television, wearable computing devices (for example, watches, rings, or glasses), or other appropriate technology that comprises or is coupled to a web server (or other suitable application for interacting with web page files) or that comprises or is coupled to an application 123.

The user can use the receiving computing device 120 to receive audio-based data via the microphone component 125 using the user interface 121 and the application 123. For example, the user interface 121 comprises a touch screen, a voice-based interface, or any other interface that allows the user to provide input and receive output from the application 123. In an example, the user interacts with the application 123 via the user interface 121 to receive, read, or interact with the audio-based data received via the microphone component 125.

The application 123 is a program, function, routine, applet or similar entity that exists on and performs its operations on the receiving computing device 120. For example, the application 123 be one or more of an audio application, a data application, an account management computing system 130 application, an Internet browser, a user interface 121 application, or other suitable application operating on the receiving computing device 120. In some examples, the user must install an application 123 and/or make a feature selection on the receiving computing device 120 to obtain the benefits of the techniques described herein.

In an example, the data storage unit 129 and application 123 may be implemented in a secure element or other secure memory (not shown) on the receiving computing device 120. In another example, the data storage unit 129 may be a separate memory unit resident on the receiving computing device 120. An example data storage unit 129 enables storage of optimum data reception hardware configurations. In an example, the data storage unit 129 can comprise a local or remote data storage structure accessible to the receiving computing device 120 suitable for storing information. In an example, the data storage unit 129 stores encrypted information, such as HTML5 local storage.

In an example, the microphone component 125 comprises a microphone device that is capable of receiving sound inputs from an environment of the receiving computing device 120. In an example, the microphone component 125 communicates with the application 123 to receive an instruction to transition from a passive mode to an active mode and listen for sound inputs. In an example, the microphone component 125 receives sound inputs while in the active mode and transmits the received sound inputs to the application 123.

In an example, the audio component 127 comprises a speaker device or other device capable of producing a sound output. An example sound output comprises an ultrasound output. In an example, the audio component 127 communicates with the application 123 to receive an instruction to broadcast a sound output. In an example, the audio component 127 is a component of the receiving computing device 120. In another example, the audio component 127 is communicatively coupled to the receiving computing device 120.

In another example embodiment, the receiving computing device 120 functions as the broadcasting computing device 110 and performs the functions of the broadcasting computing device 110 described herein. In another example embodiment, the broadcasting computing device 110 functions as the receiving computing device 120 and performs the functions of the receiving computing device 120 described herein.

An example receiving computing device 120 and broadcasting computing device 110 communicate with the account management computing system 130. An example account management computing system 130 comprises an account management component 131, an audio transmission configuration component 133, an audio reception configuration component 135 and a data storage unit 137.

In an example, the receiving computing device 120 and broadcasting computing device 110 register with or are otherwise associated with the account management computing system 130. In this example, the account management computing system 130 is capable of identifying the receiving computing device 120 and broadcasting computing device 110 and transmitting hardware configurations, instructions, updates, or other forms of data transmission to each computing device 110 and 120. In another example, the account management computing system 130 is capable of identifying communications or transmissions received from the receiving computing device 120 and broadcasting computing device 110. In an example each device has a unique or otherwise identifiable code associated with it. In an example, each computing device (including 110 and 120) downloads or authorizes an application (including 113 and 123) associated with the account management computing system 130 onto the device to perform the techniques described herein. In an example, this information is maintained within the account management component 131.

In an example, each device (including 110 and 120) comprises optimum audio transmission and audio reception configurations. In an example, the account management computing device 130 communicates with the devices (including 110 and 120) to determine the initial optimum audio transmission and audio reception configurations.

In an example, the audio transmission configuration component 133 determines initial optimum broadcasting configuration data for multiple broadcasting computing devices (including 110). For example, each broadcasting computing device (including 110) transmits an audio token using varying hardware configurations to the account management computing system 130. In other examples, the account management computing system 130 determines a set of preferred initial test configurations, transmits the preferred initial test configurations to each broadcasting computing device (including 110), and each broadcasting computing device (including 110) transmits an audio token over each of the initial test configurations to the account management computing system 130. The account management computing system 130 logs data associated with each transmission of audio token and determines a quality score for each transmission of audio token from each particular broadcasting computing device (including 110) based on the data logged from each transmission of each audio token.

In an example, the audio reception configuration component 135 determines initial optimum reception configuration data for multiple receiving computing devices (including 120). For example, each receiving computing device (including 120) receives an audio token using varying hardware configurations from the account management computing system 130. In other examples, the account management computing system 130 determines a set of preferred initial test configurations, transmits the set of preferred initial test configurations to each receiving computing device (including 120), and each receiving computing device (including 120) receives an audio token using each of the set of preferred initial test configurations from the account management computing system 130. The account management computing system 130 logs data associated with each reception of an audio token and determines a quality score for each reception of an audio token from each receiving computing device (including 120) based on the data logged from each reception of each audio token.

The computing device (including 110 and 120) optimum hardware configurations are saved in the data storage unit 137. In an example, the data storage unit 137 can comprise any local or remote data storage structure accessible to the account management computing system 130 suitable for storing information. In an example, the data storage unit 137 stores encrypted information, such as HTML5 local storage.

In another example, the computing device (including 110 and 120) perform some or all of the functions of the account management computing system 130.

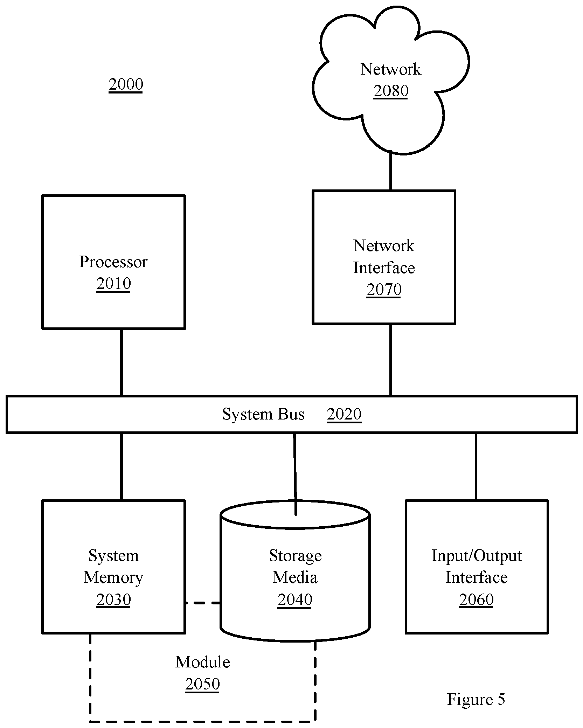

In examples, the network computing devices and any other computing machines associated with the technology presented herein may be any type of computing machine such as, but not limited to, those discussed in more detail with respect to Figure 5. Furthermore, any functions, applications, or components associated with any of these computing machines, such as those described herein or any others (for example, scripts, web content, software, firmware, hardware, or modules) associated with the technology presented herein may by any of the components discussed in more detail with respect to Figure 5. The computing machines discussed herein may communicate with one another, as well as with other computing machines or communication systems over one or more networks, such as network 140. The network 140 may comprise any type of data or communications network, including any of the network technology discussed with respect to Figure 5.

### Example Processes

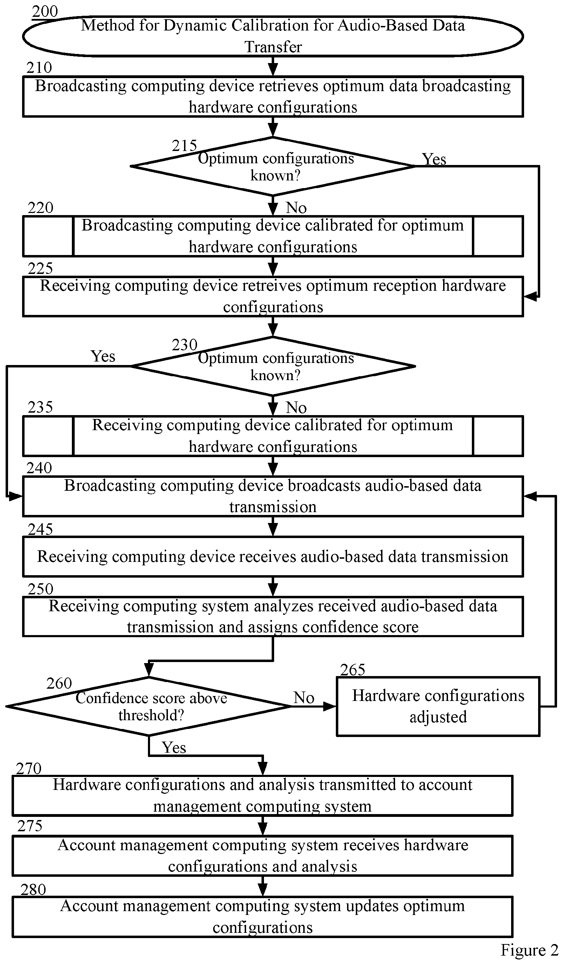

The components of the example operating environment 100 are described hereinafter with reference to the example methods illustrated in Figures 2-4. The example methods of Figures 2-4 may also be performed with other systems and in other environments. The operations described with respect to any of the Figures 2-4 can be implemented as executable code stored on a computer or machine readable non-transitory tangible storage medium (e.g., floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.).

In an example, when a computing device is used for audio-based data transfer, a specific hardware configuration needs to be used by it to broadcast and/or receive the audio for best data transfer results. A computing device's audio configuration is comprised of many parameters, which determine how receiving and broadcasting takes place. Example parameters comprise, but aren't limited to, volume, frequency band, sampling rate, microphone input used, speaker output used, number of repeated attempts made, usage of a stereo channel, and usage of a monolog mono channel. In an example, a specific combination of these parameters is required to obtain the best broadcasting and/or best reception. To determine the correct specific combination of these parameters, the computing device needs to be calibrated.

Figure 2 is a block flow diagram depicting a method for dynamic calibration for audio-based data transfer, in accordance with certain examples. The method 200 is described with reference to the components illustrated in Figure 1.

In block 210, the broadcasting computing device 110 retrieves the device's optimum data broadcasting hardware configurations. In an example, the specific combination of parameters that provide the best data transmission has been previously configured and the specific combination is saved by the broadcasting computing device 110. In this example, the broadcasting computing device 110 retrieves the saved combination of parameters prior to initiating a new audio-based data transfer and configures the device's hardware settings to correspond to the retrieved settings. In an example, the application 113 configures the device's hardware settings. In an example, the device's optimum data broadcasting parameters were determined during a prior audio-based data transmission. In another example, the optimum data broadcasting parameters were provided by the account management computing system 130.

In another example, the broadcasting computing device 110 does not have saved optimum data broadcasting parameters.

In block 215, the broadcasting computing device 110 determines whether optimum data broadcasting parameters are known. In an example, the application 113 determines whether optimum data broadcasting parameters were provided by the account management computing system 130. In another example, the application 113 determines whether the broadcasting computing device 110 previously performed an audio-based data transfer.

If the optimum data broadcasting parameters are known, the method 200 proceeds to block 225.

Returning to block 215, if the optimum data broadcasting parameters are not known, the method 200 proceeds to block 220.

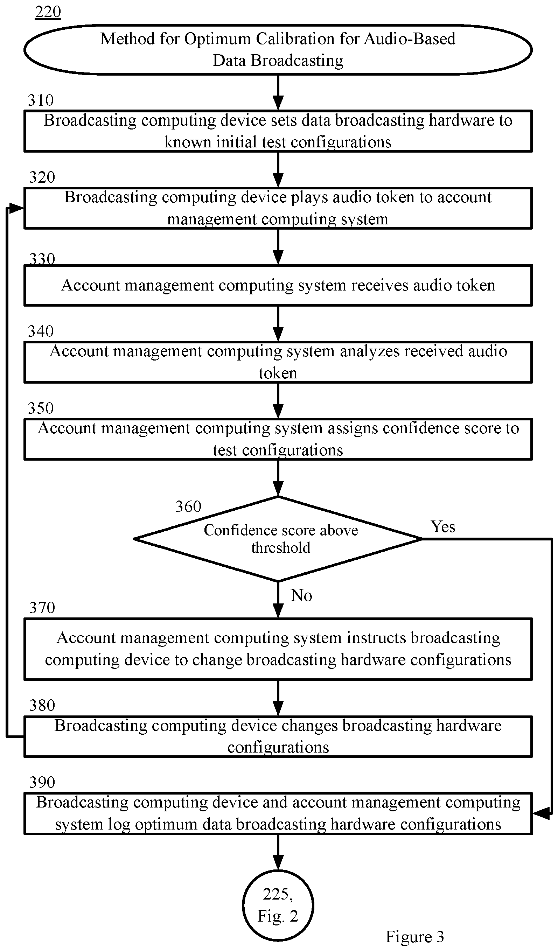

In block 220, the broadcasting computing device 110 is calibrated for optimum hardware configurations. The method for optimum calibration for audio-based data broadcasting is described in more detail hereinafter with reference to the methods described in Figure 3.

Figure 3 is a block flow diagram depicting a method 220 for optimum calibration for audio-based data broadcasting, in accordance with certain examples, as referenced in block 220. The method 220 is described with reference to the components illustrated in Figure 1.

In an example, the optimum calibration for audio-based data broadcasting comprises a series of transmissions or communications between the broadcasting computing device 110 and the account management computing system 130. In another example, optimum calibration for audio-based data broadcasting comprises a series of transmission or communications between the broadcasting computing device 110 and another computing device, such as the receiving computing device 120. In this example, the receiving computing device 120 performs the functions of the account management computing system 130 described herein in connection with the methods performed in Figure 3.

In block 310, the broadcasting computing device 110 sets the data broadcasting hardware to an initial test configuration. In an example, the application 113 sets the data broadcasting hardware to the initial test configuration. In an example, the initial test configuration settings comprise initial manufacture settings, last known settings, or default settings.

In an example, the application 113 sets an initial volume, frequency, sampling rate, speaker output used, audio channel used, or other properties applying sound waves or sound transmission that may be varied.

In block 320, the broadcasting computing device 110 plays an audio token to the account management computing system 130. In an example, the audio token comprises an audio-based data token known by the account management computing system 130 and the broadcasting computing device 110. In an example, the same audio-based data token is used throughout the initial calibration.

In an example, the application 113 instructs the audio component 117 to play the audio token using the initial volume, frequency, sampling rate, speaker output used, audio channel, or other initial hardware configuration setting set in block 310.

In block 330, the account management computing system 130 receives the audio token. In an example, the audio token is received by the audio reception configuration component 135. In an example, the audio reception configuration component 135 comprises a microphone component capable of receiving an audio transmission and an application capable of cyphering the data transmitted in the sound waves.

In block 340, the account management computing system 130 analyzes the received audio token. In an example, the account management computing system 130 determines whether the audio transmission was inaudible to the human ear, but audible to the microphone component of the audio reception configuration component 135. In this example, it is desirable to transmit the audio-based data in a manner that is unheard by the user, for example utilizing ultrasound sound waves.

In another example, the account management computing system 130 determines the reliability of the audio-based data transmission. In this example, the account management computing system 130 determines whether the complete data transmission was received. Since the audio token is known to both the account management computing system 130 and the broadcasting computing device 110, the data received in the audio token can be compared to the known data to determine whether the complete data was received.

In another example, the account management computing system 130 determines a time elapsed to complete the transmission of the audio token or other data to evaluate the quality of the transmission. In this example, the transmission comprises a time stamp or other indicator that allows the account management computing system 130 to determine a time in which the transmission was initiated. The account management computing system 130 can determine the time elapsed to complete the transmission by comparing the time the transmission was received to the time in which the transmission was initiated.

In another example, the account management computing system 130 determines the signal correlation. The broadcasting computing device 110 transmits a known audio token with certain audio waveform. The account management computing system 130 determines the cross-correlation of the audio signal with the expected signal. In an example, this determination aids in the computing of a confidence scoring based on the signal cross-correlation score for every broadcasting computing device 110 even in instances where the audio-based data transmission is not successful completed.

In block 350, the account management computing system 130 assigns a confidence score to the initial hardware configurations. In an example, the account management computing system 130 assigns a sub-score to each factor analyzed in block 340. The sub-scores are combined to determine a confidence score. In another example, some factors analyzed in block 340 are weighted prior to the determination of the confidence score. For example, if reliability is more important than the transmission being inaudible to the human ear, the reliability of the transmission is weighted greater than the audibleness of the transmission. In another example, any combination of weights, algorithms, or equations can be used to assign the confidence score.

In block 360, the account management computing system 130 determines whether the confidence score is above a predetermined threshold. In an example, the account management computing system 130 defines a threshold confidence score. In this example, the determined threshold score must be at or above the defined threshold confidence score to be acceptable.

If the confidence score is at or above the defined threshold confidence score, the method 220 proceeds to block 390.

Returning to block 360 in Figure 3, if the confidence score below the defined threshold confidence score, the method 220 proceeds to block 370.

In block 370, the account management computing system 130 instructs the broadcasting computing device 110 to change or vary its broadcasting hardware configurations. In an example, the account management computing system 130 transmits a notification to the broadcasting computing device 110 that the confidence score was below the defined threshold. In another example, the notification comprises instructions to change or more of the broadcasting computing device 110 hardware settings. In this example, the account management computing system 130 provides recommended hardware settings to the broadcasting computing device 110. In another example the broadcasting computing device 110 determines which hardware settings to change.

In another example the account management computing system 130 transmits the confidence score to the broadcasting computing device 110, and the broadcasting computing device 110 determine whether the confidence score is above or below the predefined threshold. In this example, if the broadcasting computing device 110 determines the confidence score is below the predefined threshold, it changes its broadcasting hardware configurations.

In block 380, the broadcasting computing device 110 changes the broadcasting hardware configurations. In an example, the application 113 changes one or more hardware configurations. In an example, the broadcasting computing device 110 performs multiple different audio-based data transfers. In this example, each audio-based data transfer is made using a different configuration. Example hardware configuration variations comprise varying configurations for volume, frequency, sampling rate, speaker output used, audio channel used, or other properties applying sound waves or sound transmission that may be varied via the broadcasting computing device 110. For example, the broadcasting computing device 110 transmits using a predetermined number of different volume configurations, a predetermined number of different frequency configurations, and a predetermined number of different amplitude configurations. In an example, the broadcasting computing device 110 varies one particular hardware configuration while holding all other hardware configurations constant.

From block 380, the method 220 proceeds to block 320 and the broadcasting computing device 110 plays the audio token to the account management computing device 130. In an example, the methods described in blocks 320 through 380 repeat until the confidence score is at or above the predefined threshold.

In another example, the methods described in block 320 through 380 repeat until the optimum hardware configurations are identified. In this example, two or more sets of hardware configurations are at or above the predefined threshold. The confidence scores of each set of hardware configurations are compared and the hardware configuration with the highest confidence score is the optimum hardware configuration.

Returning to block 390, once the optimum hardware configuration is identified, the broadcasting computing device 110 and the account management computing system 130 log the optimum broadcasting hardware configurations. In an example, the account management computing system 130 transmits a notification to the broadcasting computing device 110 that comprises the optimum hardware configurations. In another example, the broadcasting computing device 110 transmits a notification to the account management computing system 130 that comprises the optimum hardware configurations.

In another example, the account management computing system 130 compares multiple different confidence scores from multiple different transmissions received from multiple different broadcasting computing device 110 to determine the optimum broadcasting hardware configurations.

In an example, the account management computing system 130 provides the updated optimum hardware configuration data to multiple broadcasting computing devices 110. In this example, each of the multiple broadcasting computing devices 110 comprise the same make or model of computing devices (for example, the same model of smart phone). In an example, the updated optimum hardware configuration data is pushed to each device as an application 113 update.

In another example, the methods performed by the account management computing system 130 are performed by the receiving computing device 120 or another computing system capable of communicating with the broadcasting computing device 110.

The method 220 then proceeds to block 225 in Figure 2.

In block 225, the receiving computing device 120 retrieves the device's optimum reception hardware configurations. In an example, the specific combination of parameters that provide the best data reception has been previously configured and the specific combination is saved by the receiving computing device 120. In this example, the receiving computing device 120 retrieves the saved combination of parameters prior to receiving a new audio-based data transfer and configures the device's hardware settings to correspond to the retrieved settings. In an example, the application 123 configures the device's hardware settings. In an example, the device's optimum data reception parameters were determined during a prior audio-based data transmission. In another example, the optimum data reception parameters were provided by the account management computing system 130. In an example, the receiving computing device 120 receives a notification or signal to indicate a new audio-based data transfer has been initiated. In another example, the user opens the application 123 or performs an action on the receiving computing device 120 to indicate a new audio-based data transfer has been initiated.

In another example, the receiving computing device 120 does not have a saved optimum data broadcasting parameters.

In block 230, the receiving computing device 120 determines whether optimum data reception parameters are known. In an example, the application 123 determines whether optimum data reception parameters were provided by the account management computing system 130. In another example, the application 123 determines whether the receiving computing device 120 previously received an audio-based data transfer.

If the optimum data reception parameters are known, the method 200 proceeds to block 240.

Returning to block 230, if the optimum data reception parameters are not known, the method 200 proceeds to block 235.

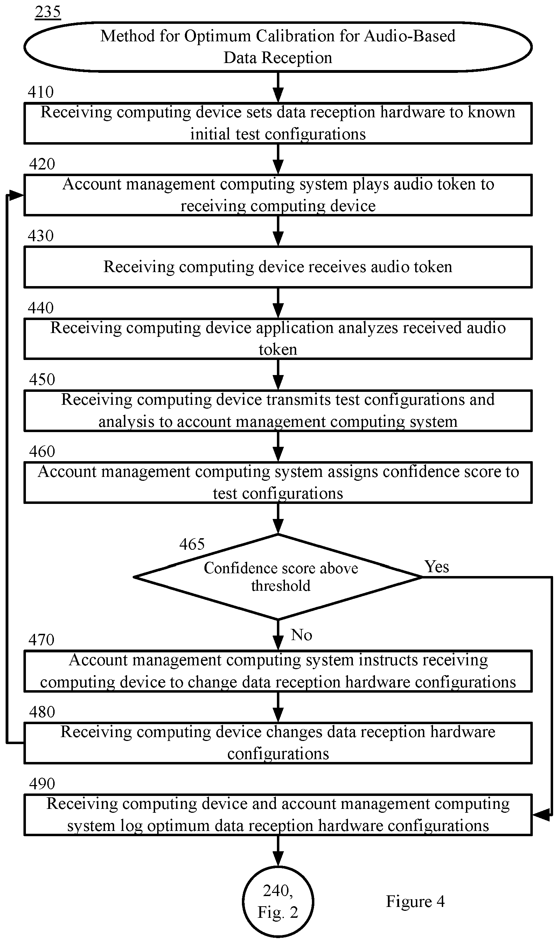

In block 235, the receiving computing device 120 is calibrated for optimum hardware configurations. The method for optimum calibration for audio-based data reception is described in more detail hereinafter with reference to the methods described in Figure 4.

Figure 4 is a block flow diagram depicting a method 235 for optimum calibration for audio-based data reception, in accordance with certain examples, as referenced in block 235. The method 235 is described with reference to the components illustrated in Figure 1.

In an example, the initial calibration for audio-based data reception comprises a series of transmissions or communications between the account management computing system 130 and the receiving computing device 120. In another example, initial calibration for audio-based data reception comprises a series of transmission or communications between the receiving computing device 120 and another computing device, such as the broadcasting computing device 110. In this example, the broadcasting computing device 110 performs the functions of the account management computing system 130 described herein in connection with the methods performed in Figure 4.

In block 410, the receiving computing device 120 sets the data reception hardware to an initial test configuration. In an example, the application 123 sets the data reception hardware to the initial test configuration. In an example, the initial test configuration settings comprise initial manufacture settings, last known settings, or default settings.

In an example, the application 123 sets an initial volume, frequency, sampling rate, speaker output used, audio channel used, or other properties applying sound waves or sound transmission that may be varied.

In block 420, the account management computing system 130 plays an audio token to the receiving computing device 120. In an example, the audio token comprises an audio-based data token known by the account management computing system 130 and the receiving computing device 120. In an example, the same audio-based data token is used throughout the calibration. In an example, the audio transmission configuration component 133 plays the audio token. In an example, the audio transmission configuration component 133 comprises a speaker or other audio transmission component capable of transmitting an audio transmission.

In block 430, the receiving computing device 120 receives the audio token. In an example, the audio token is received by the microphone component 127. In an example, the microphone component 127 receives the audio transmission and the application 123 is capable of cyphering the data transmitted in the sound waves. In an example, the application 123 instructs the microphone component 125 to listen for the audio token using the initial volume, frequency, sampling rate, speaker output used, audio channel, or other initial hardware configuration setting set in block 410.

In block 440, the receiving computing device 120 analyzes the received audio token. In an example, the application 123 determines signal strength of the audio transmission. In this example, it is desirable to receive the audio-based data via the strongest signal strength.

In another example, the application 123 determines the reliability of the audio-based data transmission. In this example, the application 123 determines whether the complete data transmission was received. Since the audio token is known to both the account management computing system 130 and the receiving computing device 120, the data received in the audio token can be compared to the known data to determine whether the complete data was received.

In another example, the application 123 determines a time elapsed to complete the transmission of the audio token or other data to evaluate the quality of the transmission. In this example, the transmission comprises a time stamp or other indicator that allows the application 123 to determine a time in which the transmission was initiated. The application 123 can determine the time elapsed to complete the transmission by comparing the time the transmission was received to the time in which the transmission was initiated.

In another example, the receiving computing device 120 determines the signal correlation. The account management computing system 130 transmits a known audio token with certain audio waveform. The receiving computing device 120 determines the cross-correlation of the audio signal with the expected signal.

In block 450, the receiving computing device 120 transmits the test configurations and the analysis to the account management computing system 130.

In block 460, the account management computing system 130 assigns a confidence score to the initial hardware configurations. In an example, the account management computing system 130 assigns a sub-score to each factor analyzed in block 440. The sub-scores are combined to determine a confidence score. In another example, some factors analyzed in block 440 are weighted prior to the determination of the confidence score. For example, if reliability is more important than the transmission being inaudible to the human ear, the reliability of the transmission is weighted greater than the audibleness of the transmission. In another example, any combination of weights, algorithms, or equations can be used to assign the confidence score.

In another example, the receiving computing device 120 assigns the confidence score to the test configurations.

In block 465, the account management computing system 130 determines whether the confidence score is above a predetermined threshold. In an example, the account management computing system 130 defines a threshold confidence score. In this example, the determined threshold score must be at or above the defined threshold confidence score to be acceptable.

If the confidence score is at or above the defined threshold confidence score, the method 235 proceeds to block 490.

Returning to block 465 in Figure 4, if the confidence score below the defined threshold confidence score, the method 235 proceeds to block 470.

In block 470, the account management computing system 130 instructs the receiving computing device 120 to change or vary its reception hardware configurations. In an example, the account management computing system 130 transmits a notification to the receiving computing device 120 that the confidence score was below the defined threshold. In another example, the notification comprises instructions to change or more of the receiving computing device 120 hardware settings. In this example, the account management computing system 130 provides recommended hardware settings to the receiving computing device 120. In another example the receiving computing device 120 determines which hardware settings to change.

In another example, the account management computing system 130 transmits the confidence score to the receiving computing device 120, and the receiving computing device 120 determines whether the confidence score is above or below the predefined threshold. In this example, if the receiving computing device 120 determines the confidence score is below the predefined threshold, it changes its reception hardware configurations.

In another example, the receiving computing device 120 determines the confidence score and the application 123 determines whether the confidence score is above or below the predefined threshold. In this example, if the receiving computing device 120 determines the confidence score is below the predefined threshold, it changes its reception hardware configurations.

In block 480, the receiving computing device 120 changes the reception hardware configurations. In an example, the application 123 changes one or more hardware configurations. In an example, the receiving computing device 120 receives multiple different audio-based data transfers. In this example, each audio-based data transfer is received using a different configuration. Example hardware configuration variations comprise varying configurations for volume, frequency, sampling rate, speaker output used, audio channel used, or other properties applying sound waves or sound reception that may be varied via the receiving computing device 120. For example, the receiving computing device 120 receives audio-based data transmission using a predetermined number of different volume configurations, a predetermined number of different frequency configurations, and a predetermined number of different amplitude configurations. In an example, the receiving computing device 120 varies one particular hardware configuration while holding all other hardware configurations constant.

From block 480, the method 235 proceeds to block 420 and the account management computing system 130 plays the audio token to the receiving computing device 120. In an example, the methods described in blocks 420 through 480 repeat until the confidence score is at or above the predefined threshold.

In another example, the methods described in block 420 through 480 repeat until the optimum hardware configurations are identified. In this example, two or more sets of hardware configurations are at or above the predefined threshold. The confidence scores of each set of hardware configurations are compared and the hardware configuration with the highest confidence score is the optimum hardware configuration.

Returning to block 490, once the optimum hardware configuration is identified, the receiving computing device 120 and the account management computing system 130 log the optimum reception hardware configurations. In an example, the account management computing system 130 transmits a notification to the receiving computing device 120 that comprises the optimum hardware configurations. In another example, the receiving computing device 120 transmits a notification to the account management computing system 130 that comprises the optimum hardware configurations.

In another example, the account management computing system 130 compares multiple different confidence scores from multiple different transmissions received from multiple different receiving computing devices 120 to determine the optimum reception hardware configurations.

In an example, the account management computing system 130 provides the updated optimum hardware configuration data to multiple receiving computing devices 120. In this example, each of the multiple receiving computing devices 120 comprise the same make or model of computing devices (for example, the same model of smart phone). In an example, the updated optimum hardware configuration data is pushed to each device as an application 123 update.

In another example, the methods performed by the account management computing system 130 are performed by the broadcasting computing device 110 or another computing system capable of communicating with the receiving computing device 120.

The method 235 then proceeds to block 240 in Figure 2.

Returning to Figure 2, in an example, the initial optimum data broadcasting hardware configurations are known to the broadcasting computing device 110 and the initial optimum data reception hardware configurations are known to the receiving computing device 120. In an example, the actual optimum hardware configurations can change over time. For example, when there is a shift in the intended data transfer scheme or when there is a change in conditions. In this example, the devices (including 110 and 120) dynamically configure the hardware settings in response to the changes.

In block 240, the broadcasting computing device 110 broadcasts an audio-based data transmission to the receiving computing device 120. In an example, the user of the broadcasting computing device 110 instructs the device to transmit data in an audio-based transfer. In an example, this transfer is initiated using the application 113 and the initial optimum data broadcasting hardware configurations.

In block 245, the receiving computing device 120 receives the audio-based data transmission from the broadcasting computing device 110. In an example, the user of the receiving computing device 120 instructions the device to listen for and receive the audio-based transfer. In an example, this transfer is received using the application 123 and the initial optimum data broadcasting hardware configurations.

In block 250, the receiving computing device 120 analyzes the received audio-based data transmission and assigns a confidence score. In an example, the application 123 determines a signal strength of the audio transmission. In this example, it is desirable to receive the audio-based data via the strongest signal strength.

In another example, the broadcasting computing device 110 analyzes the transmitted audio-based data transmission and assigns a confidence score. In an example, the application 113 determines whether the audio transmission was inaudible to the human ear, but audible to the microphone component 125. In this example, it is desirable to transmit the audio-based data in a manner that is unheard by the user, for example utilizing ultrasound sound waves.

In an example, the applications (including 113 or 123) determine the reliability of the audio-based data transmission. In this example, the application 123 determines whether the complete data transmission was received.

In another example, the application 123 determines a time elapsed to complete the transmission of the audio token or other data to evaluate the quality of the transmission. In this example, the transmission comprises a time stamp or other indicator that allows the application 123 to determine a time in which the transmission was initiated. The application 123 can determine the time elapsed to complete the transmission by comparing the time the transmission was received to the time in which the transmission was initiated.

In an example the receiving computing device 120 assigns a confidence score to the hardware configurations. In an example, the receiving computing device 120 assigns a sub-score to each factor analyzed in block 250. The sub-scores are combined to determine a confidence score. In another example, some factors analyzed in block 250 are weighted prior to the determination of the confidence score. For example, if reliability is more important than the transmission being inaudible to the human ear, the reliability of the transmission is weighted greater than the audibleness of the transmission. In another example, any combination of weights, algorithms, or equations can be used to assign the confidence score.

In another example, the broadcasting computing device 110 assigns the confidence score to the configurations. In yet another example, the analysis is transmitted to the account management computing system 130 and the account management computing system 130 assigns the confidence score to the configurations.

In block 260, the receiving computing device 120 determines whether the confidence score is above a predetermined threshold. In another example, the broadcasting computing device 110 determines whether the confidence score is above a predetermined threshold. In an example, the account management computing system 130 defines a threshold confidence score. In this example, the determined threshold score must be at or above the defined threshold confidence score to be acceptable.

If the confidence score below the defined threshold confidence score, the method 200 proceeds to block 265.

In block 265, the receiving computing device 120 changes the reception hardware configurations. In an example, the application 123 changes one or more hardware configurations. Example hardware configuration variations comprise varying configurations for volume, frequency, sampling rate, speaker output used, audio channel used, or other properties applying sound waves or sound reception that may be varied via the receiving computing device 120. In an example, the receiving computing device 120 varies one particular hardware configuration while holding all other hardware configurations constant.

In another example, the broadcasting computing device 110 changes the broadcasting hardware configurations. In an example, the application 113 changes one or more hardware configurations. Example hardware configuration variations comprise varying configurations for volume, frequency, sampling rate, speaker output used, audio channel used, or other properties applying sound waves or sound reception that may be varied via the broadcasting computing device 110. In an example, the broadcasting computing device 110 varies one particular hardware configuration while holding all other hardware configurations constant.

The method 200 then proceeds to block 240. In an example, the broadcasting computing device 110 re-broadcasts the audio-based data transmission using the new broadcasting hardware configurations. In another example, the confidence score for the broadcasting hardware configurations are at or above the threshold confidence score and the broadcasting computing device 110 continues to broadcast the audio-based data transmission using the previous broadcasting hardware configurations. In this example, the receiving computing device 120 varied the reception hardware configurations.

In an example, the methods described in block 240 through 265 repeat until the confidence scores for the broadcasting computing device 110 hardware settings and the receiving computing device 120 hardware settings are at or above the predefined threshold.

Returning to block 260, if the confidence scores are above the predefined threshold, the method 200 proceeds to block 270.

In block 270, the hardware configurations are transmitted to the account management computing system 130. In an example, the analysis is also transmitted to the account management computing system 130.

In block 275, the account management computing system 130 receives the hardware configurations. In an example, the account management computing system 130 compiles the confidence scores from multiple different broadcasting computing devices 110 and multiple different receiving computing devices 120.

In block 280, the account management computing system 130 updates the optimum hardware configurations if the received hardware configurations do not match the saved hardware configurations.

In an example, the account management computing system 130 determines whether the hardware configuration is no longer the optimum transmission configuration for the broadcasting computing device 110. In this example, the account management computing system 130 determines that the alternative hardware configuration received from the broadcasting computing device 110 is the new optimum configuration for transmission of audio-based data and updates the optimum hardware configuration data based on the determination.

In another example, the account management computing system 130 determines whether the hardware configuration is no longer the optimum reception configuration for the receiving computing device 120. In this example, the account management computing system 130 determines that the alternative hardware configuration received from the receiving computing device 120 is the new optimum configuration for reception of audio-based data and updates the optimum hardware configuration data based on the determination.

### Other Examples

Figure 5 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain examples, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a location of a user cannot be determined. Thus, the user may have control over how information is collected about the user and used by a content server.

Examples may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing examples in computer programming, and the examples should not be construed as limited to any one set of computer program instructions. Further, a skilled programmer would be able to write such a computer program to implement an example of the disclosed examples based on the appended flow charts and associated description in the application text. Therefore, disclosure of a particular set of program code instructions is not considered necessary for an adequate understanding of how to make and use examples. Further, those skilled in the art will appreciate that one or more aspects of examples described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magnetooptical media, CD-ROM, etc. Digital circuitry can include integrated circuits, gate arrays, building block logic, field programmable gate arrays (FPGA), etc.

The example systems, methods, and acts described in the examples presented previously are illustrative, and, in alternative examples, certain acts can be performed in a different order, in parallel with one another, omitted entirely, and/or combined between different examples, and/or certain additional acts can be performed, without departing from the scope of various examples.

Although specific examples have been described above in detail, the description is merely for purposes of illustration. It should be appreciated, therefore, that many aspects described above are not intended as required or essential elements unless explicitly stated otherwise.

## Claims

1. A computer-implemented method to dynamically calibrate hardware settings for optimum audio-based data transfer, comprising:
receiving (430), by a computing device (120), an audio-based data transmission using an initial data reception hardware configuration;
analyzing (440), by the computing device, a first signal strength of the audio-based data transmission and a reliability of the audio-based data transmission;
determining (460), by the computing device, a confidence score for the initial data reception hardware configurations;
determining (465), by the computing device, that the confidence score is below a defined threshold confidence score;
in response to determining that the confidence score is below the defined threshold confidence score, modifying (480), by the computing device, a data reception hardware configuration;
receiving, by the computing device, a retransmitted audio-based data transmission using the modified data reception hardware configuration;
analyzing, by the computing device, a second signal strength of the retransmitted audio-based data transmission and a second reliability of the audio-based data transmission;
determining, by the computing device, a second confidence score for the modified data reception hardware configurations;
determining, by the computing device, that the second confidence score is at or above the defined threshold confidence score;
in response to determining that the second confidence score is at or above the defined threshold confidence score, updating, by the computing device, the initial data reception hardware configuration; and
transmitting (490) the modified data reception hardware configuration to multiple computing devices that comprise an identical model identifier as the computing device.

2. The computer-implemented method of claim 1, wherein the initial data reception hardware configurations comprise a first combination of hardware configuration parameters previously configured to provide the best data reception for the computing device.

3. The computer-implemented method of claim 2, wherein the first hardware configuration parameters comprise an initial sampling rate, an initial speaker output, and an initial audio channel.

4. The computer-implemented method of any one of claims 1 to 3, further comprising analyzing, by the computing device, a time elapsed to complete the transmission of the audio-based data transmission.

5. The computer-implemented method of any one of the preceding claims,
wherein determining the confidence score for the initial data reception hardware configurations comprises assigning, by the computing device, a first sub-score for the signal strength of the audio-based data transmission and a second sub-score for the reliability of the audio-based data transmission.

6. The computer-implemented method of claim 5, further comprising weighting, by the computing device, the first or second sub-score prior to determining the confidence score for the initial data reception hardware configurations.

7. The computer-implemented method of any one of the preceding claims, further comprising:
analyzing, by the computing device, an audibleness of the audio-based data transmission; and
weighting, by the computing device, the reliability and the audibleness of the audio-based data transmission.

8. The computer-implemented method of any one of the preceding claims,
wherein the modified data reception hardware configuration comprises a modified sampling rate, an initial speaker output, and an initial audio channel.

9. The computer-implemented method of any one of the preceding claims,
wherein the modified data reception hardware configuration comprises an initial sampling rate, a modified speaker output, and an initial audio channel.

10. The computer-implemented method of any one of the preceding claims, further comprising communicating (370), by the computing device, a notification to a second computing device broadcasting the audio-based data transmission to modify data broadcasting hardware configurations, wherein the second computing device modifies the data broadcasting hardware configurations prior to retransmitting the audio-based data transmission.

11. A computer program product, comprising:
a non-transitory computer-readable medium having computer-readable program instructions embodied therein that when executed by a computer cause the computer to perform the method of any of claims 1-10.

12. A system to dynamically calibrate hardware settings for optimum audio-based data transfer, comprising:
a microphone component (125);
a storage device (2040); and
a processor (2010) communicatively coupled to the storage device and the microphone component, wherein the processor executes application code instructions that are stored in the storage device to cause the system to:
receive (430) an audio-based data transmission using an initial data reception hardware configuration;
analyze (440) a signal strength of the audio-based data transmission and a reliability of the audio-based data transmission;
determine (460) a confidence score for the initial data reception hardware configurations;
determine (465) that the confidence score is below a defined threshold confidence score;
modify (480) a data reception hardware configuration in response to determining that the confidence score is below the defined threshold confidence score;
receive a retransmitted audio-based data transmission using the modified data reception hardware configuration;
analyze a second signal strength of the retransmitted audio-based data transmission and a second reliability of the audio-based data transmission;
determine a second confidence score for the modified data reception hardware configurations;
determine that the second confidence score is at or above the defined threshold confidence score; update the initial data reception hardware configuration in response to determining that the second confidence score is at or above the defined threshold confidence score; and
transmit (490) the modified data reception hardware configuration to multiple computing devices that comprise an identical model identifier as the computing device.

13. The system of claim 12, wherein the initial data reception hardware configurations comprise an initial sampling rate, an initial speaker output, and an initial audio channel.

14. The system of claim 12 or 13, wherein the processor is further configured to execute application code instructions stored in the storage device to cause the system to analyze a time elapsed to complete the transmission of the audio-based data transmission.

15. The system of any one of claims 12 to 14, wherein the modified data reception hardware configuration comprises one or more of a modified sampling rate, a modified speaker output, and a modified audio channel.

## Patentansprüche

1. Computerimplementiertes Verfahren zum dynamischen Kalibrieren von Hardwareeinstellungen für eine optimale audiobasierte Datenübertragung, umfassend:
Empfangen (430) durch eine Rechenvorrichtung (120) einer audiobasierten Datenübertragung unter Verwendung einer anfänglichen Datenempfangshardwarekonfiguration;
Analysieren (440) durch die Rechenvorrichtung einer ersten Signalstärke der audiobasierten Datenübertragung und einer Zuverlässigkeit der audiobasierten Datenübertragung;
Bestimmen (460) durch die Rechenvorrichtung einer Vertrauensbewertung für die anfänglichen Datenempfangshardwarekonfigurationen;
Bestimmen (465) durch die Rechenvorrichtung, dass die Vertrauensbewertung unter einem definierten Schwellenwert der Vertrauensbewertung liegt;
als Reaktion auf das Bestimmen, dass die Vertrauensbewertung unter dem definierten Schwellenwert der Vertrauensbewertung liegt, Modifizieren (480) durch die Rechenvorrichtung einer Datenempfangshardwarekonfiguration;
Empfangen durch die Rechenvorrichtung einer erneut übertragenen audiobasierten Datenübertragung unter Verwendung der modifizierten Datenempfangshardwarekonfiguration;
Analysieren durch die Rechenvorrichtung einer zweiten Signalstärke der erneut übertragenen audiobasierten Datenübertragung und einer zweiten Zuverlässigkeit der audiobasierten Datenübertragung;
Bestimmen durch die Rechenvorrichtung einer zweiten Vertrauensbewertung für die modifizierten Datenempfangshardwarekonfigurationen;
Bestimmen durch die Rechenvorrichtung, dass die zweite Vertrauensbewertung bei oder über dem definierten Schwellenwert der Vertrauensbewertung liegt;
als Reaktion auf das Bestimmen, dass die zweite Vertrauensbewertung bei oder über dem definierten Schwellenwert der Vertrauensbewertung liegt, Aktualisieren durch die Rechenvorrichtung der anfänglichen Datenempfangshardwarekonfiguration; und
Übertragen (490) der modifizierten Datenempfangshardwarekonfiguration an mehrere Rechenvorrichtungen, die eine identische Modellkennung wie die Rechenvorrichtung umfassen.

2. Computerimplementiertes Verfahren nach Anspruch 1, wobei die anfänglichen Datenempfangshardwarekonfigurationen eine erste Kombination von Hardwarekonfigurationsparametern umfassen, die zuvor konfiguriert wurden, um den besten Datenempfang für die Rechenvorrichtung bereitzustellen.

3. Computerimplementiertes Verfahren nach Anspruch 2, wobei die ersten Hardwarekonfigurationsparameter eine anfängliche Abtastrate, eine anfängliche Lautsprecherausgabe und einen anfänglichen Audiokanal umfassen.

4. Computerimplementiertes Verfahren nach einem der Ansprüche 1 bis 3, das ferner das Analysieren durch die Rechenvorrichtung einer Zeit umfasst, die verstrichen ist, um die Übertragung der audiobasierten Datenübertragung abzuschließen.

5. Computerimplementiertes Verfahren nach einem der vorhergehenden Ansprüche, wobei das Bestimmen der Vertrauensbewertung für die anfänglichen Datenempfangshardwarekonfigurationen das Zuweisen durch die Rechenvorrichtung einer ersten Unterbewertung für die Signalstärke der audiobasierten Datenübertragung und einer zweiten Unterbewertung für die Zuverlässigkeit der audiobasierten Datenübertragung umfasst.

6. Computerimplementiertes Verfahren nach Anspruch 5, ferner umfassend das Gewichten durch die Rechenvorrichtung der ersten oder der zweiten Unterbewertung vor dem Bestimmen der Vertrauensbewertung für die anfänglichen Datenempfangshardwarekonfigurationen.

7. Computerimplementiertes Verfahren nach einem der vorhergehenden Ansprüche, ferner umfassend:
Analysieren durch die Rechenvorrichtung einer Hörbarkeit der audiobasierten Datenübertragung; und
Gewichten durch die Rechenvorrichtung der Zuverlässigkeit und der Hörbarkeit der audiobasierten Datenübertragung.

8. Computerimplementiertes Verfahren nach einem der vorhergehenden Ansprüche, wobei die modifizierte Datenempfangshardwarekonfiguration eine modifizierte Abtastrate, eine anfängliche Lautsprecherausgabe und einen anfänglichen Audiokanal umfasst.

9. Computerimplementiertes Verfahren nach einem der vorhergehenden Ansprüche, wobei die modifizierte Datenempfangshardwarekonfiguration eine anfängliche Abtastrate, eine modifizierte Lautsprecherausgabe und einen anfänglichen Audiokanal umfasst.

10. Computerimplementiertes Verfahren nach einem der vorhergehenden Ansprüche, das ferner das Übermitteln (370) durch die Rechenvorrichtung einer Benachrichtigung an eine zweite Rechenvorrichtung umfasst, die die audiobasierte Datenübertragung rundsendet, um Datenrundsendungshardwarekonfigurationen zu modifizieren, wobei die zweite Rechenvorrichtung die Datenrundsendungshardwarekonfigurationen modifiziert, bevor die audiobasierte Datenübertragung erneut übertragen wird.

11. Computerprogrammprodukt, umfassend:
ein nichtflüchtiges computerlesbares Medium mit darin verkörperten computerlesbaren Programmanweisungen, die, wenn sie von einem Computer ausgeführt werden, den Computer veranlassen, das Verfahren nach einem der Ansprüche 1-10 durchzuführen.

12. System zum dynamischen Kalibrieren von Hardwareeinstellungen für eine optimale audiobasierte Datenübertragung, umfassend:
eine Mikrofonkomponente (125);
eine Speichervorrichtung (2040); und
einen Prozessor (2010), der kommunikativ mit der Speichervorrichtung und der Mikrofonkomponente gekoppelt ist, wobei der Prozessor Anwendungscodeanweisungen ausführt, die in der Speichervorrichtung gespeichert sind, um das System zu veranlassen, zum:
Empfangen (430) einer audiobasierten Datenübertragung unter Verwendung einer anfänglichen Datenempfangshardwarekonfiguration;
Analysieren (440) einer ersten Signalstärke der audiobasierten Datenübertragung und einer Zuverlässigkeit der audiobasierten Datenübertragung;
Bestimmen (460) einer Vertrauensbewertung für die anfänglichen Datenempfangshardwarekonfigurationen;
Bestimmen (465), dass die Vertrauensbewertung unter einem definierten Schwellenwert der Vertrauensbewertung liegt;
Modifizieren (480) einer Datenempfangshardwarekonfiguration als Reaktion auf das Bestimmen, dass die Vertrauensbewertung unter dem definierten Schwellenwert der Vertrauensbewertung liegt;
Empfangen einer erneut übertragenen audiobasierten Datenübertragung unter Verwendung der modifizierten Datenempfangshardwarekonfiguration;
Analysieren einer zweiten Signalstärke der erneut übertragenen audiobasierten Datenübertragung und einer zweiten Zuverlässigkeit der audiobasierten Datenübertragung;
Bestimmen einer zweiten Vertrauensbewertung für die modifizierten Datenempfangshardwarekonfigurationen;
Bestimmen, dass die zweite Vertrauensbewertung bei oder über dem definierten Schwellenwert der Vertrauensbewertung liegt;
Aktualisieren der anfänglichen Datenempfangshardwarekonfiguration als Reaktion auf das Bestimmen, dass die zweite Vertrauensbewertung bei oder über dem definierten Schwellenwert der Vertrauensbewertung liegt; und
Übertragen (490) der modifizierten Datenempfangshardwarekonfiguration an mehrere Rechenvorrichtungen, die eine identische Modellkennung wie die Rechenvorrichtung umfassen.

13. System nach Anspruch 12, wobei die anfänglichen Datenempfangshardwarekonfigurationen eine anfängliche Abtastrate, eine anfängliche Lautsprecherausgabe und einen anfänglichen Audiokanal umfassen.

14. System nach Anspruch 12 oder 13, wobei der Prozessor ferner konfiguriert ist, um in der Speichervorrichtung gespeicherte Anwendungscodeanweisungen auszuführen, um das System zu veranlassen, eine Zeit zu analysieren, die verstrichen ist, um die Übertragung der audiobasierten Datenübertragung abzuschließen.

15. System nach einem der Ansprüche 12 bis 14, wobei die modifizierte Datenempfangshardwarekonfiguration eines oder mehrere von einer modifizierten Abtastrate, einer modifizierten Lautsprecherausgabe und einem modifizierten Audiokanal umfasst.

## Revendications

1. Procédé mis en œuvre par ordinateur pour étalonner dynamiquement des paramètres matériels pour un transfert de données audio optimal, comprenant :
la réception (430), par un dispositif informatique (120), d'une transmission de données audio en utilisant une configuration matérielle de réception de données initiale ;
l'analyse (440), par le dispositif informatique, d'une première intensité de signal de la transmission de données audio et d'une fiabilité de la transmission de données audio ;
la détermination (460), par le dispositif informatique, d'un score de confiance pour les configurations matérielles de réception de données initiales ;
la détermination (465), par le dispositif informatique, que le score de confiance est inférieur à un score de confiance seuil défini ;
en réponse à la détermination que le score de confiance est inférieur au score de confiance seuil défini, la modification (480), par le dispositif informatique, d'une configuration matérielle de réception de données ;
la réception, par le dispositif informatique, d'une transmission de données audio retransmise en utilisant la configuration matérielle de réception de données modifiée ;
l'analyse, par le dispositif informatique, d'une deuxième intensité de signal de la transmission de données audio retransmise et d'une deuxième fiabilité de la transmission de données audio ;
la détermination, par le dispositif informatique, d'un deuxième score de confiance pour les configurations matérielles de réception de données modifiées ;
la détermination, par le dispositif informatique, que le deuxième score de confiance est égal ou supérieur au score de confiance seuil défini ;
en réponse à la détermination que le deuxième score de confiance est égal ou supérieur au score de confiance seuil défini, la mise à jour, par le dispositif informatique, de la configuration matérielle de réception de données initiale ; et
la transmission (490) de la configuration matérielle de réception de données modifiée à plusieurs dispositifs informatiques qui comprennent un identifiant de modèle identique à celui du dispositif informatique.

2. Procédé mis en œuvre par ordinateur selon la revendication 1, dans lequel les configurations matérielles de réception de données initiales comprennent une première combinaison de paramètres de configuration matérielle précédemment configurés pour fournir la meilleure réception de données pour le dispositif informatique.

3. Procédé mis en œuvre par ordinateur selon la revendication 2, dans lequel les premiers paramètres de configuration matérielle comprennent une fréquence d'échantillonnage initiale, une sortie de haut-parleur initiale et un canal audio initial.

4. Procédé mis en œuvre par ordinateur selon l'une quelconque des revendications 1 à 3, comprenant en outre l'analyse, par le dispositif informatique, d'un temps écoulé pour terminer la transmission de la transmission de données audio.

5. Procédé mis en œuvre par ordinateur selon l'une quelconque des revendications précédentes, dans lequel la détermination du score de confiance pour les configurations matérielles de réception de données initiales comprend l'attribution, par le dispositif informatique, d'un premier sous-score pour l'intensité de signal de la transmission de données audio et d'un deuxième sous-score pour la fiabilité de la transmission de données audio.

6. Procédé mis en œuvre par ordinateur selon la revendication 5, comprenant en outre la pondération, par le dispositif informatique, du premier ou du deuxième sous-score avant de déterminer le score de confiance pour les configurations matérielles de réception de données initiales.

7. Procédé mis en œuvre par ordinateur selon l'une quelconque des revendications précédentes, comprenant en outre :
l'analyse, par le dispositif informatique, de l'audibilité de la transmission de données audio ; et
la pondération, par le dispositif informatique, de la fiabilité et de l'audibilité de la transmission de données audio.

8. Procédé mis en œuvre par ordinateur selon l'une quelconque des revendications précédentes, dans lequel la configuration matérielle de réception de données modifiée comprend une fréquence d'échantillonnage modifiée, une sortie de haut-parleur initiale et un canal audio initial.

9. Procédé mis en œuvre par ordinateur selon l'une quelconque des revendications précédentes, dans lequel la configuration matérielle de réception de données modifiée comprend une fréquence d'échantillonnage initiale, une sortie de haut-parleur modifiée et un canal audio initial.

10. Procédé mis en œuvre par ordinateur selon l'une quelconque des revendications précédentes, comprenant en outre la communication (370), par le dispositif informatique, d'une notification à un deuxième dispositif informatique diffusant la transmission de données audio pour modifier des configurations matérielles de diffusion de données, dans lequel le deuxième dispositif informatique modifie les configurations matérielles de diffusion de données avant de retransmettre la transmission de données audio.

11. Produit de programme informatique, comprenant :
un support lisible par ordinateur non transitoire comportant des instructions de programme lisibles par ordinateur mises en œuvre dans celui-ci qui, lorsqu'elles sont exécutées par un ordinateur, amènent l'ordinateur à exécuter le procédé de l'une quelconque des revendications 1 à 10.

12. Système d'étalonnage dynamique des paramètres matériels pour un transfert de données audio optimal, comprenant :
un composant de microphone (125) ;
un dispositif de stockage (2040) ; et
un processeur (2010) couplé en communication avec le dispositif de stockage et le composant de microphone, dans lequel le processeur exécute des instructions de code d'application qui sont stockées dans le dispositif de stockage pour amener le système à :
recevoir (430) une transmission de données audio en utilisant une configuration matérielle de réception de données initiale ;
analyser (440) une intensité de signal de la transmission de données audio et une fiabilité de la transmission de données audio ;
déterminer (460) un score de confiance pour les configurations matérielles de réception de données initiales ;
déterminer (465) que le score de confiance est inférieur à un score de confiance seuil défini ;
modifier (480) une configuration matérielle de réception de données en réponse à la détermination que le score de confiance est inférieur au score de confiance seuil défini ;
recevoir une transmission de données audio retransmise en utilisant la configuration matérielle de réception de données modifiée ;
analyser une deuxième intensité de signal de la transmission de données audio retransmise et une deuxième fiabilité de la transmission de données audio ;
déterminer un deuxième score de confiance pour les configurations matérielles de réception de données modifiées ;
déterminer que le deuxième score de confiance est égal ou supérieur au score de confiance seuil défini ; mettre à jour la configuration matérielle de réception de données initiale en réponse à la détermination que le deuxième score de confiance est égal ou supérieur au score de confiance seuil défini ; et
transmettre (490) la configuration matérielle de réception de données modifiée à plusieurs dispositifs informatiques qui comprennent un identifiant de modèle identique à celui du dispositif informatique.

13. Système selon la revendication 12, dans lequel les configurations matérielles de réception de données initiales comprennent une fréquence d'échantillonnage initiale, une sortie de haut-parleur initiale et un canal audio initial.

14. Système selon la revendication 12 ou 13, dans lequel le processeur est en outre configuré pour exécuter des instructions de code d'application stockées dans le dispositif de stockage pour amener le système à analyser un temps écoulé pour terminer la transmission de la transmission de données audio.

15. Système selon l'une quelconque des revendications 12 à 14, dans lequel la configuration matérielle de réception de données modifiée comprend un ou plusieurs parmi une fréquence d'échantillonnage modifiée, une sortie de haut-parleur modifiée et un canal audio modifié.
